# FASCICULE DE BREVET EUROPEEN

(11) **EP 3 717 812 B1**
(45) Date de publication et mention de la délivrance du brevet: **19.04.2023**
(21) Numéro de dépôt: 18830728.4
(22) Date de dépôt: 29.11.2018
(51) Int. Cl.: F16K 27/02, F02M 25/08, F16K 31/06, H01F 7/08, H01F 7/16

(54) **ELECTROVANNE**
MAGNETVENTIL
SOLENOID VALVE

(30) Priorité: 30.11.2017 FR 1761442
(43) Date de publication de la demande: 07.10.2020
(73) Titulaire: Valeo Systèmes de Contrôle Moteur, 95892 Cergy - Pontoise (FR)
(72) Inventeur: GUERBAOUI, Samir, 95892 Cergy Pontoise (FR); AMAYA, Luis, 95892 Cergy Pontoise (FR); CHAM, Renaud, 95892 Cergy Pontoise (FR)
(74) Mandataire: Valeo Powertrain Systems
(86) Numéro de dépôt international: PCT/EP2018/082972
(87) Numéro de publication internationale: WO 2019/106075

(56) Documents cités:
- JP-A- 2011 218 239
- US-A1- 2008 035 868
- US-A1- 2008 290 306
- US-A1- 2012 097 875
- US-A1- 2017 254 437

## Description

La présente invention concerne les électrovannes et plus particulièrement mais non exclusivement les électrovannes dites de purge canister, servant à l'évacuation des vapeurs de carburant.

On connaît par le brevet EP 1 181 442 un exemple d'une telle électrovanne. De façon conventionnelle, l'électrovanne comporte un noyau fixe creux en un matériau ferromagnétique s'étendant selon un axe, une bobine montée autour du noyau fixe et un élément d'obturation, mobile selon l'axe du noyau fixe sous l'effet du champ magnétique généré par la bobine. US2012/0097875 A1 et US 2017/0254437 A1 divulguent des électrovannes selon l'état de la technique.

Il est souhaitable d'une façon générale que l'électrovanne ait un temps de réponse le plus faible possible, une consommation électrique faible, une grande compacité et fiabilité. De plus, l'électrovanne doit pouvoir fonctionner dans l'environnement d'un véhicule automobile, et ses performances doivent être les plus constantes possibles en fonction de la température.

Il existe un besoin pour perfectionner encore les électrovannes et notamment pour disposer d'une électrovanne performante et fiable sous un encombrement réduit.

L'invention vise à répondre à ce besoin et elle y parvient grâce à une électrovanne selon la revendication 1.

Grâce à l'invention, le fait que le noyau fixe présente une zone amincie positionnée axialement entre les extrémités axiales du noyau plongeur permet d'atteindre plus facilement une saturation du matériau magnétique du noyau fixe dans la zone amincie et ainsi d'augmenter la force d'attraction du noyau plongeur vers la position prise par celui-ci lorsque la bobine est électriquement alimentée.

L'invention permet d'accroître les performances de l'électrovanne, par exemple pour rendre celle-ci plus rapide lors de son passage de l'état d'obturation à l'état ouvert, ou permet, à caractéristiques constantes, de diminuer la section de cuivre et/ou le courant dans la bobine.

La zone amincie peut ainsi avantageusement être réalisée de telle sorte que lorsque la bobine est parcourue par son courant nominal, elle soit saturée à plus de 95% par l'induction magnétique, voire à 100%.

La zone amincie peut être réalisée de diverses manières. La zone amincie présente une diminution progressive de sa section jusqu'à un minimum de section, puis une augmentation progressive de sa section depuis ce minimum de section. Cela permet de limiter les fuites de champ magnétique, en évitant des zones très anguleuses, qui créent de forts gradients de champ.

La zone amincie est définie au moins partiellement par au moins un creux ouvert radialement vers l'extérieur, ménagé sur le noyau fixe. Ce creux est par exemple formé par usinage avec le reste du noyau fixe.

La zone amincie est délimitée extérieurement par une gorge annulaire de forme générale en V, ouverte radialement vers l'extérieur. Cette gorge est de préférence de forme biconique. Elle est symétrique par rapport à un plan médian de symétrie, perpendiculaire à l'axe longitudinal du noyau fixe. De préférence, la zone amincie est délimitée au moins partiellement par au moins un cône dont l'angle par rapport à l'axe du noyau fixe est compris entre 15 et 35°.

Le noyau fixe peut présenter une épaisseur de matière eₙ en dehors de la zone amincie et une épaisseur minimale eₘᵢₙ dans la zone amincie, avec eₘᵢₙ<eₙ/2. On peut avoir eₙ > 2 mm, mieux 2 < eₙ < 4 mm. De préférence, on a eₘᵢₙ < 1,5 mm, mieux 0,75 mm < eₘᵢₙ < 1,25 mm.

La distance mesurée selon l'axe du noyau fixe, entre la zone la plus amincie d'épaisseur eₘᵢₙ et l'extrémité axiale la plus proche du noyau plongeur, peut être comprise entre 1 et 2 fois eₘᵢₙ.

Le noyau fixe peut présenter, le long d'au moins une partie de la zone amincie, une surface cylindrique de révolution, de même axe que le noyau fixe. De préférence, cette surface cylindrique s'étend axialement le long d'une partie au moins de la gorge.

Le noyau fixe peut présenter un épaulement et une surépaisseur s'étendant entre la surface cylindrique et l'épaulement. Cette surépaisseur peut permettre d'ajuster l'intensité de la force d'attraction du noyau plongeur. L'épaulement peut servir de butée d'enfoncement à un insert en un matériau non magnétique, introduit dans le noyau fixe, servant de guide à un ressort de rappel du noyau plongeur en position d'obturation.

L'électrovanne est de préférence une électrovanne de purge des vapeurs de carburant, appelée EVP (ou EVC Electrovanne de Purge de Canister).

L'invention a encore pour objet, selon un autre de ses aspects, une électrovanne comportant :
- Un noyau fixe en un matériau ferromagnétique, s'étendant selon un axe,
- une bobine montée autour du noyau fixe,
- un noyau plongeur mobile selon l'axe du noyau fixe sous l'effet du champ magnétique généré par la bobine,
électrovanne caractérisée par le fait que le noyau fixe présente une zone amincie saturée à plus de 95% par l'induction magnétique de la bobine, lorsque cette dernière est alimentée à son courant nominal.

L'électrovanne selon cet aspect peut présenter tout ou partie des caractéristiques de l'invention énoncée en premier lieu.

L'invention pourra être mieux comprise à la lecture de la description détaillée qui va suivre, d'un exemple de mise en oeuvre non limitatif de celle-ci, et à l'examen du dessin annexé, sur lequel :
- La figure 1 représente de façon schématique, en perspective, un exemple d'électrovanne selon l'invention,
- la figure 2 représente le système électromagnétique de l'électrovanne de la figure 1,
- la figure 3 est une coupe axiale du système de la figure 2,
- la figure 4 représente isolément le noyau fixe,
- la figure 5 est un détail de la figure 3,
- la figure 6 représente isolément le noyau fixe en coupe axiale, et
- la figure 7 est un résultat de simulation de l'intensité de l'induction magnétique dans le noyau fixe et le noyau plongeur lors du fonctionnement de l'électrovanne.

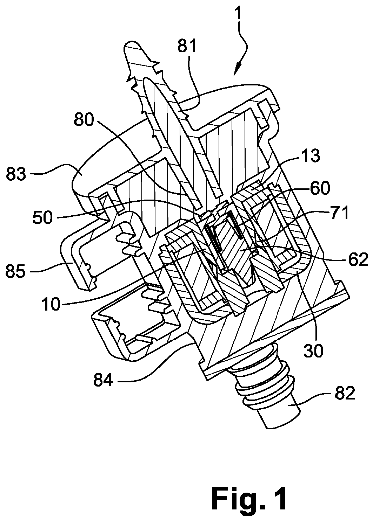

L'électrovanne 1 représentée sur les figures est destinée à être montée au sein d'un circuit d'évacuation des vapeurs de carburant d'un véhicule automobile, mais l'invention n'est pas limitée à cette application. Elle peut être connectée à des conduits d'entrée et de sortie non représentés grâce à des embouts respectifs 81 et 82. L'embout 82 peut être moulé avec le corps 84 de l'électrovanne, en matière plastique, et l'embout 81 avec une pièce 83 qui est rapportée sur le corps 84 et le ferme. L'électrovanne comporte un connecteur pour son raccordement électrique, dont on aperçoit sur la figure 1 seulement l'embase 85.

L'électrovanne 1 est, dans l'exemple considéré, fermée au repos, et s'ouvre lorsqu'alimentée électriquement, par exemple à une tension DC comprise entre 10 et 15V. Les matières plastiques de l'électrovanne sont choisies pour résister aux vapeurs d'hydrocarbures, notamment d'essence.

Le corps de l'électrovanne 1 loge intérieurement un système électromagnétique. Ce dernier comporte, comme on peut le voir notamment sur les figures 1 à 3, un noyau fixe 10, tubulaire d'axe X, porté à une extrémité par une platine 13 s'étendant perpendiculairement à l'axe X, le noyau 10 et la platine 13 étant en un matériau ferromagnétique doux tel que par exemple du fer ou un acier ferromagnétique. Le noyau 10 et la platine 13 peuvent être réalisés d'un seul tenant de façon monolithique par usinage.

L'électrovanne 1 comporte une bobine 20 montée sur un support 21, par exemple en matière plastique, d'axe X, cette bobine 20 s'étendant autour du noyau fixe 10 pour générer en son sein un champ magnétique lorsqu'alimentée électriquement. La bobine 20 est par exemple en fil de cuivre isolé, notamment émaillé.

Une culasse externe 30 en un matériau ferromagnétique permet d'assurer le rebouclage du flux magnétique entre l'extrémité 11 du noyau fixe 10 opposée à la platine 13 et cette dernière. La platine 13 présente à ses extrémités latérales des reliefs 14 diamétralement opposés, pour l'accrochage de pattes de fixation 31 de la culasse 30.

L'électrovanne 1 comporte également un élément mobile selon l'axe X sous l'effet du champ magnétique généré par la bobine 20, cet élément mobile étant sous la forme d'un noyau plongeur 40, réalisé en un matériau ferromagnétique, mobile axialement selon l'axe X à l'intérieur du noyau fixe 10.

Le noyau plongeur 40 est intérieur au noyau fixe, dans l'exemple considéré, et l'écoulement contrôlé par l'électrovanne, qui est de préférence gazeux (vapeurs de carburant en l'espèce), a lieu à son contact quand l'électrovanne est ouverte.

De préférence, le noyau plongeur 40 est en un matériau magnétique doux, qui perd son aimantation lorsque le champ magnétique de la bobine cesse, de même que le noyau fixe 10.

Le noyau plongeur 40 comporte une partie tubulaire 41 et une tête 42 formée par un retour annulaire vers l'intérieur. La tête 42 est traversée en son centre par un orifice pour le montage d'un joint de clapet 50. Ce dernier comporte une gorge annulaire dans laquelle s'engage le retour 42 et vient en appui contre un siège 80, visible sur la figure 1, lorsque l'électrovanne est au repos, pour fermer le conduit associé 81.

Un ressort de rappel 60 assure le retour du noyau plongeur 40 dans sa position de repos, de fermeture du conduit 81 précité, en l'absence d'alimentation électrique de l'électrovanne. Ce ressort 60 s'interpose entre une butée 61 formée par un insert 62 logé fixement dans le noyau 10, et la face intérieure de la tête 42 du noyau plongeur 40. Le ressort 60 est par exemple de forme hélicoïdale, étant guidé par l'insert 62. Ce dernier peut présenter un épaulement qui définit la butée 61. Cet épaulement peut être formé par une partie médiane élargie 63 de l'insert 62, située entre des parties d'extrémité 66 de forme ogivale tronquée, pour faciliter l'écoulement au sein de l'électrovanne quand celle-ci est ouverte. Dans la configuration ouverte, le joint 50 s'est décollé de son siège 80.

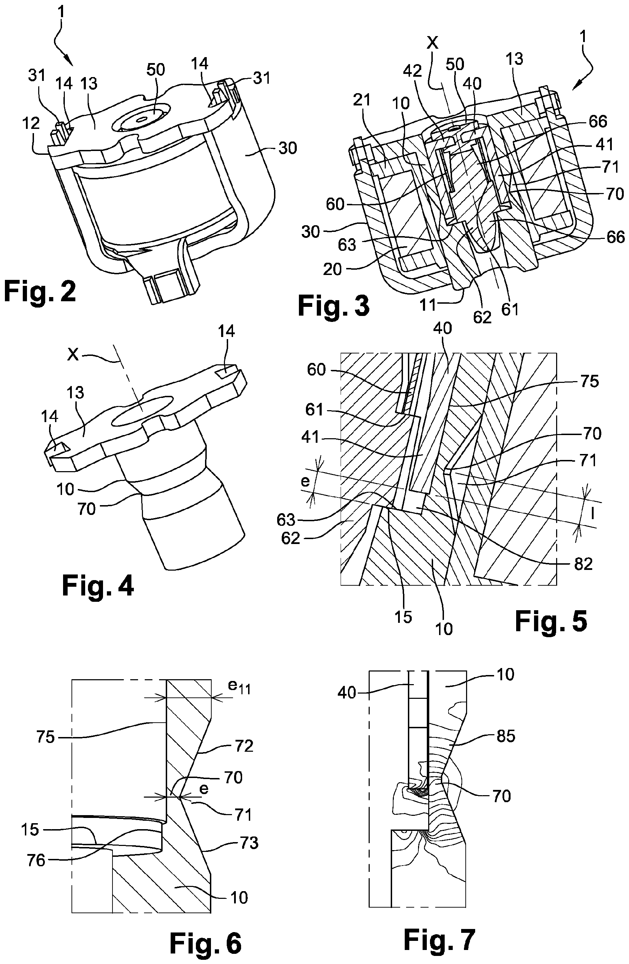

L'insert 62 est réalisé en un matériau non magnétique, par exemple une matière thermoplastique, et vient en appui, comme on peut le voir notamment sur la figure 5, par un épaulement 63 contre un épaulement correspondant 15 du noyau fixe 10.

Conformément à l'invention, le noyau fixe 10 présente une zone amincie 70 qui permet de concentrer l'induction magnétique dans celui-ci au point de saturer ou presque le matériau magnétique qui constitue ce noyau fixe.

On a représenté à la figure 7 le résultat d'une simulation montrant l'intensité de l'induction magnétique dans le matériau du noyau fixe 10, la saturation intervenant là où la paroi du noyau fixe 10 est la plus mince. Sur cette figure, les zones claires correspondent aux zones où l'induction magnétique est la plus forte.

On peut donner à la zone amincie 70 des formes diverses. Toutefois, comme illustré à la figure 6 notamment, on préfère réaliser la zone amincie 70 avec une forme biconique en creux. La zone amincie 70 est délimitée, du côté radialement extérieur, par une gorge 71 présentant deux surfaces coniques 72 et 73 d'axe X, respectivement convergente et vers le bas et divergente vers le haut. L'angle α que fait chaque surface conique 72 ou 73 avec l'axe X est par exemple compris entre 15 et 35°.

La présence de la zone amincie saturée 70 permet d'assurer un couplage magnétique fort avec le noyau plongeur, comme illustré à la figure 7. On a de préférence une saturation à 100% de la matière par l'induction magnétique dans la zone amincie 70.

La conicité des surfaces 72 et 73 tend à assurer une homogénéisation de l'induction magnétique dans la zone où la réduction de section est la plus forte.

La valeur d'inclinaison α ci-dessus permet d'assurer un couplage sans trop de fuites magnétiques, mais suffisamment fort pour assurer une discontinuité d'induction magnétique du fait de la saturation dans la zone amincie 70.

On voit également sur la figure 5 qu'il existe, au repos, un entrefer 82 de longueur e selon l'axe X entre l'extrémité inférieure du noyau plongeur 40 et l'épaulement 15 du noyau fixe 10; cet entrefer 82 permet au noyau plongeur 40 de se déplacer axialement vers le bas lorsque la bobine électrique est alimentée, sous l'effet du champ magnétique créé par celle-ci.

Le noyau fixe 10 peut présenter sur sa surface radialement intérieure, en regard du noyau plongeur 40, notamment dans la zone à hauteur de la gorge 71, une surface cylindrique de révolution 75 autour de l'axe X, comme illustré à la figure 6.

Une surépaisseur 76 peut être formée en deçà de la zone où l'épaisseur de paroi du noyau fixe 10 est minimale, comme on le voit sur la figure 6.

Une telle surépaisseur 76 permet, en choisissant son extension axiale et son épaisseur, d'ajuster précisément la force exercée sur le noyau plongeur 40 lorsque la bobine 20 est alimentée électriquement.

Le fond de la gorge 71 peut présenter, du côté radialement extérieur, en section axiale, un rayon, par exemple de l'ordre de 0,2mm.

La distance de chevauchement *l* entre le fond de la gorge 71 et l'extrémité inférieure du noyau plongeur 40, mesurée selon l'axe X, est par exemple comprise entre 0,1 et 0,4 mm, étant par exemple de l'ordre de 0,3mm. Cette distance *l* est par exemple comprise entre 1 et 2 fois eₘᵢₙ.

L'épaisseur eₙ du noyau fixe 10 en dehors de la zone amincie vérifie par exemple la relation eₘᵢₙ<eₙ/2 où eₘᵢₙ est l'épaisseur minimale dans la zone amincie, comme on peut le voir sur la figure 6. On a par exemple eₙ > 2 mm, mieux 2 < eₙ < 4 mm, et eₘᵢₙ<1,5 mm, mieux 0,75 mm < eₘᵢₙ < 1,25mm.

Bien entendu, l'invention n'est pas limitée à l'exemple qui vient d'être décrit. On peut notamment modifier la forme de la zone amincie, dans le cadre des revendications, en fonction du résultat recherché et en particulier de la position que l'on cherche à donner au noyau plongeur lorsque l'électrovanne est alimentée électriquement.

## Revendications

1. Electrovanne (1) comportant :
- Un noyau fixe creux (10) en un matériau ferromagnétique, s'étendant selon un axe (X),
- une bobine (20) montée autour du noyau fixe,
- un noyau plongeur (41) mobile selon l'axe (X) du noyau fixe sous l'effet du champ magnétique généré par la bobine,
le noyau fixe (10) présentant une zone amincie (70) positionnée axialement entre les extrémités axiales du noyau plongeur (41), la forme amincie étant délimitée extérieurement par une gorge annulaire (71) de forme en V, ouverte radialement vers l'extérieur, l'électrovanne étant **caractérisée en ce que** la gorge (71) est symétrique par rapport à un plan médian de symétrie, perpendiculaire à l'axe longitudinal (X) du noyau fixe.

2. Electrovanne selon la revendication 1, la zone amincie (70) présentant une diminution progressive de sa section jusqu'à un minimum de section, puis une augmentation progressive de sa section depuis ce minimum de section.

3. Electrovanne selon la revendication précédente, la gorge (71) étant de forme biconique.

4. Electrovanne selon l'une quelconque des revendications précédentes, la zone amincie étant délimitée au moins partiellement par au moins un cône (72 ; 73) dont l'angle (alpha) par rapport à l'axe du noyau fixe est compris entre 15 et 35°.

5. Electrovanne selon l'une quelconque des revendications précédentes, le noyau fixe (10) présentant une épaisseur de matière eₙ en dehors de la zone amincie (70) et une épaisseur minimale eₘᵢₙ dans la zone amincie, avec eₘᵢₙ<eₙ/2.

6. Electrovanne selon la revendication 5, avec eₙ > 2 mm, mieux 2 < eₙ < 4 mm.

7. Electrovanne selon l'une des revendications 5 et 6, avec eₘᵢₙ < 1,5 mm, mieux 0,75 mm < eₘᵢₙ < 1,25 mm.

8. Electrovanne selon l'une quelconque des revendications 5 à 7, la distance (*l*) mesurée selon l'axe (X) du noyau fixe entre la zone la plus amincie (eₘᵢₙ) et l'extrémité axiale, la plus proche, du noyau plongeur (41) étant comprise entre 1 et 2 fois eₘᵢₙ.

9. Electrovanne selon l'une quelconque des revendications précédentes, le noyau fixe (10) présentant le long d'au moins une partie de la zone amincie (70) une surface (75) cylindrique de révolution, de même axe que le noyau fixe.

10. Electrovanne selon la revendication 9, la surface cylindrique (75) s'étendant axialement le long d'une partie au moins de la gorge (71).

11. Electrovanne selon la revendication 10, le noyau fixe présentant un épaulement (15) et une surépaisseur (76) s'étendant entre la surface cylindrique (75) et l'épaulement (15).

12. Electrovanne selon l'une quelconque des revendications précédentes, la zone amincie (70) étant réalisée de telle sorte que lorsque la bobine (20) est parcourue par son courant nominal, elle soit saturée à plus de 95% par l'induction magnétique.

## Patentansprüche

1. Magnetventil (1) aufweisend:
- Einen hohlen festen Kern (10) aus einem ferromagnetischen Material, der sich entlang einer Achse (X) erstreckt,
- eine Spule (20), die um den festen Kern herum angebracht ist,
- einen Tauchkern (41), der entlang der Achse (X) des festen Kerns unter der Einwirkung des Magnetfelds bewegbar ist, das von der Spule erzeugt wird,
wobei der feste Kern (10) einen verengten Bereich (70) aufweist, der axial zwischen den Axialenden des Tauchkerns (41) positioniert ist, wobei die verengte Form außen durch eine ringförmige Nut (71) in V-Form begrenzt ist, die radial nach außen offen ist, wobei das Magnetventil **dadurch gekennzeichnet ist, dass** die Nut (71) zu einer mittleren Symmetrieebene symmetrisch ist, die senkrecht zur Längsachse (X) des festen Kerns verläuft.

2. Magnetventil nach Anspruch 1, wobei der verengte Bereich (70) eine allmähliche Abnahme seines Querschnitts bis zu einem Querschnittsminimum, dann eine allmähliche Zunahme seines Querschnitts ab diesem Querschnittsminimum aufweist.

3. Magnetventil nach dem vorhergehenden Anspruch, wobei die Nut (71) doppelkegelförmig ist.

4. Magnetventil nach einem der vorhergehenden Ansprüche, wobei der verengte Bereich wenigstens teilweise von wenigstens einem Konus (72; 73) begrenzt ist, dessen Winkel (alpha) zur Achse des festen Kerns zwischen 15 und 35° beträgt.

5. Magnetventil nach einem der vorhergehenden Ansprüche, wobei der feste Kern (10) eine Materialdicke eₙ außerhalb des verengten Bereichs (70) und eine Mindestdicke eₘᵢₙ in dem verengten Bereich aufweist, wobei eₘᵢₙ < eₙ/2.

6. Magnetventil nach Anspruch 5, wobei eₙ > 2 mm, besser 2 < eₙ < 4 mm.

7. Magnetventil nach einem der Ansprüche 5 und 6, wobei eₘᵢₙ < 1,5 mm, besser 0,75 mm < eₘᵢₙ < 1,25 mm.

8. Magnetventil nach einem der Ansprüche 5 bis 7, wobei der Abstand (1), der entlang der Achse (X) des festen Kerns zwischen dem am meisten verengten Bereich (eₘᵢₙ) und dem am nächsten liegenden Axialende des Tauchkerns (41) gemessen wird, zwischen dem 1- und 2-fachen von eₘᵢₙ beträgt.

9. Magnetventil nach einem der vorhergehenden Ansprüche, wobei der feste Kern (10) entlang wenigstens eines Abschnitts des verengten Bereichs (70) eine zylinderförmige Drehfläche (75) mit der gleichen Achse wie der feste Kern aufweist.

10. Magnetventil nach Anspruch 9, wobei sich die zylinderförmige Fläche (75) axial entlang wenigstens eines Abschnitts der Nut (71) erstreckt.

11. Magnetventil nach Anspruch 10, wobei der feste Kern einen Absatz (15) und eine Überdicke (76), die sich zwischen der zylinderförmigen Fläche (75) und dem Absatz (15) erstreckt, aufweist.

12. Magnetventil nach einem der vorhergehenden Ansprüche, wobei der verengte Bereich (70) so ausgebildet ist, dass, wenn die Spule (20) von ihrem Nennstrom durchflossen wird, sie zu mehr als 95 % durch die magnetische Flussdichte gesättigt ist.

## Claims

1. Solenoid valve (1) having:
- a hollow fixed core (10) made of a ferromagnetic material, extending along an axis (X),
- a coil (20) mounted around the fixed core,
- a plunger core (41) that is movable along the axis (X) of the fixed core under the effect of the magnetic field generated by the coil,
the fixed core (10) having a thinned zone (70) positioned axially between the axial ends of the plunger core (41), the thinned zone being delimited on the outside by a V-shaped annular groove (71), which is open radially toward the outside, the solenoid valve being **characterized in that** the groove (71) is symmetric with respect to a median plane of symmetry perpendicular to the longitudinal axis (X) of the fixed core.

2. Solenoid valve according to Claim 1, wherein the thinned zone (70) exhibits a gradual decrease in its cross section down to a minimum cross section, and then a gradual increase in its cross section from this minimum cross section.

3. Solenoid valve according to the preceding claim, wherein the groove (71) has a biconical shape.

4. Solenoid valve according to any one of the preceding claims, wherein the thinned zone is delimited at least partially by at least one cone (72; 73), the angle (alpha) of which with respect to the axis of the fixed core is between 15 and 35°.

5. Solenoid valve according to any one of the preceding claims, wherein the fixed core (10) has a thickness of material eₙ away from the thinned zone (70) and a minimum thickness eₘᵢₙ in the thinned zone, where eₘᵢₙ < eₙ/2.

6. Solenoid valve according to Claim 5, wherein eₙ > 2 mm, better still 2 < eₙ < 4 mm.

7. Solenoid valve according to either of Claims 5 and 6, wherein eₘᵢₙ < 1.5 mm, better still 0.75 mm < eₘᵢₙ < 1.25 mm.

8. Solenoid valve according to any one of Claims 5 to 7, wherein the distance (*l*) measured along the axis (X) of the fixed core between the most thinned zone (eₘᵢₙ) and the closest axial end of the plunger core (41) is between 1 and 2 times eₘᵢₙ.

9. Solenoid valve according to any one of the preceding claims, wherein the fixed core (10) has, along at least a part of the thinned zone (70), a surface (75) in the form of a cylinder of revolution, of the same axis as the fixed core.

10. Solenoid valve according to Claim 9, wherein the cylindrical surface (75) extends axially along at least a part of the groove (71).

11. Solenoid valve according to Claim 10, wherein the fixed core has a shoulder (15) and an overthickness (76) extending between the cylindrical surface (75) and the shoulder (15).

12. Solenoid valve according to any one of the preceding claims, wherein the thinned zone (70) is realized such that when the coil (20) has its nominal current passing through it, it is saturated to more than 95% by the magnetic induction.
